# FASCICULE DE BREVET EUROPEEN

(11) **EP 4 374 047 B1**
(45) Date de publication et mention de la délivrance du brevet: **18.02.2026**
(21) Numéro de dépôt: 22744481.7
(22) Date de dépôt: 20.07.2022
(51) Int. Cl.: F01D 9/04, F02C 7/14, F02K 3/115

(54) **TURBOMACHINE POUR AERONEF AVEC ECHANGEUR DE CHALEUR**
TURBINENTRIEBWERK FÜR EIN FLUGZEUG MIT WÄRMETAUSCHER
TURBINE ENGINE FOR AN AIRCRAFT WITH HEAT EXCHANGER

(30) Priorité: 21.07.2021 BE 202105570
(43) Date de publication de la demande: 29.05.2024
(73) Titulaire: Safran Aero Boosters, 4041 Herstal (BE)
(72) Inventeur: PRINCIVALLE, Rémy, Henri, Pierre, 4041 Herstal (BE)
(74) Mandataire: Ipsilon Luxembourg
(86) Numéro de dépôt international: PCT/EP2022/070393
(87) Numéro de publication internationale: WO 2023/001907

(56) Documents cités:
- US-A- 5 161 947
- US-A- 6 134 880
- US-A1- 2007 245 738

## Description

### Domaine technique

L'invention porte sur l'architecture d'une turbomachine pour aéronef et en particulier le refroidissement de l'huile dans une turbomachine.

### Technique antérieure

Une turbomachine comprend généralement un circuit hydraulique destiné à la lubrification et/ou au refroidissement de certains organes mécaniques. Pour évacuer la chaleur emmagasinée par l'huile, un ou des échangeur(s) de chaleur sont généralement prévus pour que l'air froid, à disposition en quantité dans l'environnement de l'aéronef, échange de la chaleur avec l'huile chaude. L'échangeur peut être intégré dans le flux d'air de la turbomachine, sous forme d'un radiateur ou bien il peut être intégré à une aube comme décrit dans le document FR 3 089 552.

La compacité des moteurs d'une part, et leur vitesse de rotation et leur puissance d'autre part, peuvent nécessiter des échangeurs de chaleur plus imposants dans une veine d'air radialement plus petite. A l'inverse d'un petit échangeur dans une grande veine d'air, des échangeurs de chaleur proportionnellement plus encombrants dans un flux d'air plus réduit génèrent des pertes de charge qui ne sont pas négligeables.

Une solution pour minimiser le nombre d'échangeurs ou leur encombrement dans le flux d'air est d'en maximiser l'efficacité. Ceci peut être réalisé en ralentissant le flux d'air avant son entrée dans l'échangeur. Le ralentissement peut être obtenu par une augmentation de la section de la veine d'air, qui, à débit constant, résulte en une réduction de la vitesse du flux. Un canal diffusif peut ainsi être prévu en amont de l'échangeur. Un exemple est décrit dans le document US 2007 245738.

Cependant, cette solution a ses limites, car pour obtenir une stabilité du flux, il est nécessaire que le canal diffusif soit axialement assez long, ce qui impose donc une longueur axiale minimale pour la turbomachine. Cette solution est donc incompatible avec une architecture compacte.

### Exposé de l'invention

Le problème que se propose de résoudre la présente invention peut être considéré comme la conception d'une turbomachine respectant à la fois la contrainte de quantité de chaleur à évacuer par le circuit hydraulique et la contrainte de dimension axiale maximale.

À ce titre, l'objet de l'invention porte sur une turbomachine pour aéronef comprenant : un rotor ; un passage annulaire pour l'écoulement de l'air en aval du rotor ; une rangée annulaire d'aubes de redresseur agencées dans le passage, chaque aube présentant un intrados et un extrados ; et au moins un échangeur de chaleur disposé dans le passage en aval de la rangée d'aubes ; la turbomachine étant remarquable en ce qu'elle comprend en outre : une pluralité de couloirs de diffusion en amont de l'au moins un échangeur, chaque couloir étant délimité circonférentiellement par un intrados et par un extrados de deux aubes circonférentiellement adjacentes, et chaque couloir étant délimité radialement par au moins une ailette portée par au moins une des deux aubes circonférentiellement adjacentes.

Une telle turbomachine permet de ralentir le flux d'air de façon stable sur une plus courte distance axiale, respectant ainsi à la fois la contrainte d'encombrement axial et la nécessité de refroidir beaucoup d'huile.

La longueur axiale nécessaire pour la stabilité de la diffusion du flux dépend essentiellement de la hauteur du canal. Ainsi en divisant le canal en couloirs, on réduit la hauteur radiale de chacun des passages d'air et on peut donc ralentir le flux d'air de manière stable sur une courte distance axiale, obtenant ainsi un plus faible encombrement pour un même ralentissement (et donc un même gain d'efficacité de l'échangeur).

La longueur de diffusion nécessaire pour un rapport d'aires donné (entre l'aire de la section de la veine en sortie du canal de diffusion et l'aire de la section en entrée) est proportionnelle à la hauteur du canal. Ainsi, en prévoyant, par exemple 5 couloirs adjacents en hauteur au lieu d'un seul canal, la diffusion est aussi stable qu'un seul canal qui serait 5 fois plus long axialement.

La pluralité de couloirs selon l'invention peut par exemple comprendre un nombre de couloirs compris entre 2 et 10 couloirs entre deux aubes adjacentes.

L'échangeur peut être placé dans un flux secondaire de turbomachine, dit « propulsif », c'est-à-dire participant essentiellement à la poussée produite par la turbomachine.

L'échangeur peut être directement adjacent des aubes statoriques, c'est-à-dire distant des aubes statoriques de moins de 5% de leur longueur axiale. Les aubes et leurs ailettes permettent donc de guider le flux de manière optimale pour son écoulement dans l'échangeur.

Les couloirs sont radialement délimités extérieurement et intérieurement par des ailettes, à l'exception des couloirs aux extrémités radiales (interne et externe) de la veine d'air, qui sont délimitées d'un côté (interne ou externe) par le carter.

Selon un mode de réalisation avantageux de l'invention, l'au moins une ailette est portée par l'extrados d'une aube des deux aubes circonférentiellement adjacentes, et a une extrémité circonférentielle en porte-à-faux en regard de l'intrados de l'autre des deux aubes ; ou l'au moins une ailette est portée par l'intrados d'une aube des deux aubes circonférentiellement adjacentes, et a une extrémité circonférentielle en porte-à-faux en regard de l'extrados de l'autre des deux aubes ; ou l'au moins une ailette est portée par l'intrados d'une aube des deux aubes circonférentiellement adjacentes et par l'extrados de l'autre des deux aubes. Ainsi, la perte de pression aérodynamique peut être limitée aux interfaces entre l'ailette et les aubes.

Selon un mode de réalisation avantageux de l'invention, l'interface entre l'ailette et l'extrados, ou entre l'ailette et l'intrados de l'aube la portant, est aérodynamiquement optimisée par un congé de raccordement.

Selon un mode de réalisation avantageux de l'invention, chaque couloir est délimité radialement intérieurement et/ou radialement extérieurement par deux ailettes, dont l'une est portée par l'extrados d'une aube et l'autre est portée par l'intrados d'une aube circonférentiellement adjacente, est portée par l'intrados d'une aube circonférentiellement adjacente, chacune des deux ailettes s'étendant circonférentiellement sur environ la moitié de la distance circonférentielle entre les deux aubes adjacentes.

Selon un mode de réalisation avantageux de l'invention, chacune des deux ailettes a une extrémité libre, l'extrémité libre d'une ailette étant agencée au voisinage de l'extrémité libre de l'autre ailette, les extrémités libres étant préférentiellement effilées pour être aérodynamiquement optimisées.

Il est entendu que la conception peut être hybride, c'est-à-dire que dans une même rangée annulaire d'aubes statoriques, certaines ailettes peuvent être prévues sur l'intrados et/ou d'autres sur l'extrados. Ainsi certaines aubes peuvent porter une ailette sur leur intrados, une ailette sur leur extrados, ou les deux.

Selon un mode de réalisation avantageux de l'invention, les deux aubes circonférentiellement adjacentes ainsi que l'au moins une ailette délimitant le couloir entre ces deux aubes, sont monobloc. Ainsi, la perte de pression aérodynamique peut être minime aux interfaces entre l'ailette et les aubes. Plusieurs aubes adjacentes et leurs ailettes peuvent être monobloc et former ainsi un secteur angulaire de la rangée d'aubes.

« Monobloc » est ici synonyme de « intégralement fabriquées » ou « venues de matière ».

Selon un mode de réalisation avantageux de l'invention, des bras structuraux sont agencés à une position axiale qui chevauche au moins partiellement celle de l'au moins un échangeur, une aube de la rangée annulaire d'aubes étant alignée circonférentiellement avec chaque bras structural, ladite aube ayant de préférence un profil de fuite évasé. Les bras structuraux (aussi appelés « struts ») s'étendent sensiblement radialement dans la turbomachine et supportent les efforts subis par la structure. Ils sont généralement moins nombreux et plus massifs que les aubes et n'ont généralement pas de rôle aérodynamique vis-à-vis du flux qui les traverse. La superposition, complète ou partielle, des bras et de l'échangeur permet de réduire encore l'encombrement axial de la turbomachine.

L'évasement de l'aube en amont du bras structural a pour conséquence que son intrados s'éloigne de son extrados et l'aube n'a pas réellement de « bord » de fuite linéique mais plutôt un bord surfacique. Cela permet de bien diriger le flux vers le strut qui est plus épais circonférentiellement que l'aube, minimisant ainsi les pertes de charge au droit de l'échangeur et des struts.

Selon un mode de réalisation avantageux de l'invention, les aubes sont distribuées angulairement de façon irrégulière, les aubes étant plus espacées circonférentiellement les unes des autres dans le ou les portions angulaires occupées par le ou les échangeurs. Ainsi, il est possible d'homogénéiser au mieux la répartition de débit d'air à l'amont de l'aube (et à l'aval de la soufflante).

Selon une variante, les bords d'attaque des aubes sont distribués angulairement régulièrement et la géométrie des aubes est telle que les bords de fuite ne sont pas distribués régulièrement angulairement.

Selon un mode de réalisation avantageux de l'invention, la rangée annulaire d'aubes comprend des aubes supportant une ou plusieurs ailette(s) et des aubes dépourvues d'ailette, ces dernières s'étendant axialement sur une longueur plus courte, préférentiellement au moins deux fois ou au moins trois fois plus courte, que les premières.

Selon un mode de réalisation avantageux de l'invention, l'ailette s'étend circonférentiellement depuis l'au moins une des deux aubes d'une largeur au moins égale à 5 fois l'épaisseur maximale de ladite aube, l'épaisseur maximale étant définie entre la surface intrados et la surface extrados.

L'épaisseur maximale peut être définie comme la distance la plus grande entre un point de l'extrados et un point de l'intrados, mesurée perpendiculairement à la corde de l'aube et dans un plan parallèle à l'axe de la turbomachine.

En s'étendant circonférentiellement d'une distance importante par rapport à la dimension des aubes, les ailettes viennent créer des couloirs qui ralentissent l'écoulement du flux.

Selon un mode de réalisation avantageux de l'invention, l'aube portant l'ailette comprend une portion amont dépourvue d'ailette et s'étendant sur au moins un quart de la longueur axiale de l'aube. Selon un mode de réalisation avantageux de l'invention, l'ailette s'étend axialement sur une longueur d'au moins deux tiers de la longueur axiale de l'aube. Ainsi, les aubes peuvent à la fois assurer leur rôle de redressement du flux et leur rôle de réduction de la vitesse.

### Brève description des dessins

La figure 1 est une vue en coupe d'une turbomachine ;
La figure 2 représente une illustration partielle d'un flux secondaire selon l'état de la technique ;
La figure 3 illustre une vue partielle d'un flux secondaire selon l'invention ;
La figure 4 montre une vue isométrique d'une aube selon l'invention ;
La figure 5 décrit différentes variantes des ailettes ;
La figure 6 illustre un mode de réalisation avec les bras structuraux ;
La figure 7 montre une variante supplémentaire de l'invention ;
La figure 8 représente une autre variante de l'invention ;
La figure 9 illustre une variante de l'invention.

### Description détaillée

Dans la description qui suit, les directions axiales, circonférentielles et radiales se rapportent à l'axe de rotation des parties tournantes d'une turbomachine. L'amont et l'aval se rapportent au sens d'écoulement de l'air au travers de la turbomachine. Les dessins ne sont pas représentés à l'échelle et certaines dimensions peuvent être exagérées pour en faciliter la compréhension.

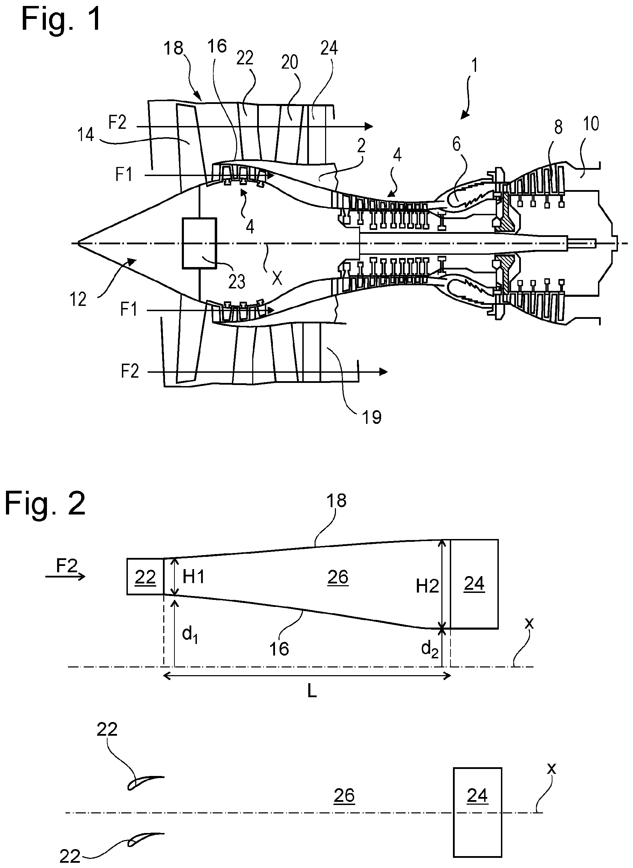

La figure 1 montre une vue en coupe schématique d'une turbomachine 1. Un carter intérieur 2 guide un flux primaire F1 qui parcourt successivement des compresseurs 4 (basse et haute pression), une chambre de combustion 6 et des turbines 8 (haute et basse pression), avant de s'échapper par une tuyère 10. L'énergie de la combustion entraîne les turbines 8 en rotation. Les turbines 8 entraînent les compresseurs 4, directement par le biais d'arbres de transmission, ou indirectement au moyen de réducteurs. Les arbres sont maintenus par des paliers qui doivent être lubrifiés.

Les turbines 8 entraînent également en rotation un rotor 12 avec des pales de soufflante 14 qui mettent en mouvement un flux secondaire F2. L'essentiel de la poussée de la turbomachine est généré par la propulsion du flux F2 par le rotor 12, qui est dit « propulsif ». Le flux primaire F1 est utilisé comme comburant pour assurer la rotation des turbines et du rotor 12.

Un carénage 16 et une nacelle 18 délimitent un passage 19 qui est parcouru par le flux secondaire F2.

Des bras structuraux 20 reprennent les efforts entre la nacelle 18 et le carter moteur 2.

Une rangée annulaire d'aubes statoriques 22 (« outlet guide vanes », OGV) peut être agencée en aval du rotor 12 pour redresser le flux F2.

Un réducteur 23 peut également grandement diminuer la vitesse de rotation (entre les turbines 8 et les pales 14).

Tout comme les paliers, le réducteur 23 est lubrifié. Le circuit d'huile doit évacuer la chaleur emmagasinée pour maintenir ses propriétés lubrifiantes et maintenir les organes de la turbomachine dans une plage de température de fonctionnement optimale. Une importante énergie thermique doit donc être dissipée par l'huile.

Pour ce faire, un échangeur air-huile 24 peut être agencé dans le flux secondaire F2. L'huile peut être refroidie par échange de chaleur avec l'air froid disponible en abondance.

La figure 2 montre, en haut, une vue schématique en coupe axiale d'un détail de la turbomachine de la figure 1. Il s'agit ici des aubes 22 et de l'échangeur de chaleur 24.

L'échangeur 24 peut être formé d'une matrice définissant des couloirs d'ailettes parcouru par l'air et en conduction thermique avec des tubulures parcourues par l'huile. Un exemple est donné dans le document EP 3 696 389 A1.

Afin d'augmenter l'efficacité de l'échangeur de chaleur 24, il peut être utile de réduire la vitesse du flux F2 avant que le flux n'atteigne l'échangeur 24. Une solution connue est de prévoir un canal de diffusion 26. Celui-ci peut faire partie du passage 19 et être délimité radialement par le carénage 16 et la nacelle 18, ou par des éléments additionnels de carénage optimisant la géométrie souhaitée pour le passage du flux secondaire F2 (non représentés).

Afin que le flux F2 reste stable aérodynamiquement lors de sa réduction de vitesse, la longueur axiale du canal de diffusion, notée L, doit être suffisante. Cette longueur suffisante est fonction de H1, la hauteur radiale de la veine d'air recevant le flux F2 en sortie des aubes, ainsi que du ratio des aires « vues par le flux » entre l'échangeur 24 et les aubes 22 (donc fonction des diamètres intérieurs d1, d2 et extérieurs (d1+2*H1), (d2+2*H2) délimitant le carénage 16 et la nacelle 18).

Une réduction de vitesse d'un facteur 2 à 5 peut être escomptée, par exemple, d'un nombre de Mach de 0.4-0.5 à 0.1-0.2.

La partie en bas de la figure 2 montre une vue radiale des aubes 22, du canal de diffusion 26 et de l'échangeur 24.

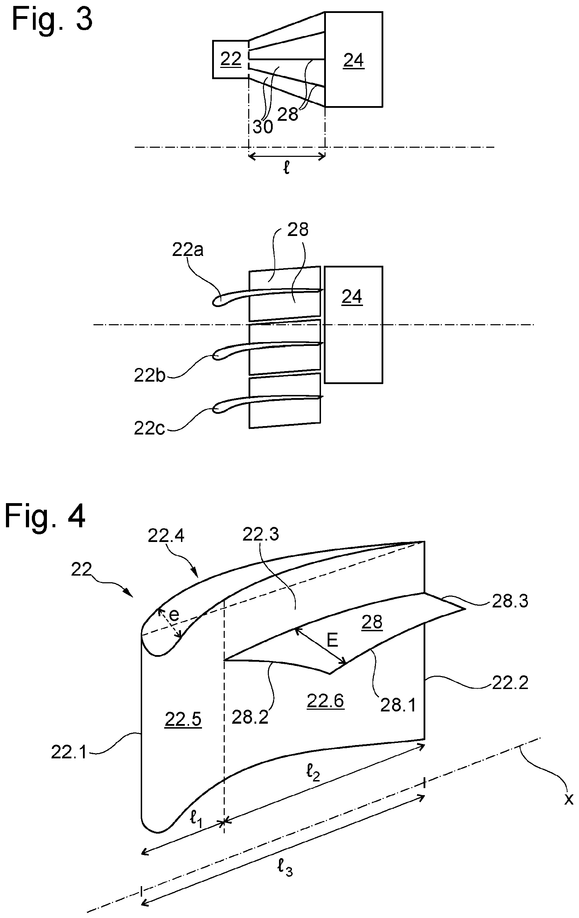

La figure 3 représente une vue partielle du flux secondaire F2 dans une turbomachine selon l'invention.

Un canal de diffusion 26 est prévu pour ralentir le flux F2. Le canal 26 est subdivisé grâce à des ailettes 28 en plusieurs couloirs 30. Les ailettes 28 peuvent être portées par des aubes 22 qui se prolongent axialement dans le canal de diffusion 26. La longueur l du canal de diffusion 26 est inversement proportionnelle au nombre de couloirs. Ainsi, l peut être dans cet exemple quatre fois plus petit que L (annoté sur la figure 2).

La partie basse de la figure 3 montre une vue radiale. On y voit notamment que les ailettes 28 peuvent s'étendre sur plus de la moitié aval des aubes 22, voire plus des deux tiers.

Les aubes 22 qui conduisent le flux vers l'échangeur 24 sont pourvues d'ailettes 28. Les autres aubes (i.e. qui sont parcourues par un flux qui ne va pas traverser l'échangeur) peuvent également être pourvues d'ailettes. Alternativement, elles peuvent ne pas comprendre d'ailettes mais être de même longueur que celles qui en supportent. Alternativement, les aubes qui ne conduisent pas le flux vers un échangeur sont aussi courtes que celles de l'état de l'art (voir la figure 2). Angulairement dans la rangée annulaire d'aubes 22, une variation de la longueur des aubes progressive peut être prévue, des aubes les plus longues précédant un échangeur, aux aubes les plus courtes, angulairement les plus éloignées de l'échangeur.

La figure 4 montre une vue isométrique d'une aube 22 selon l'invention. Cette aube 22 comprend un bord d'attaque 22.1, un bord de fuite 22.2, un intrados 22.3 et un extrados 22.4.

L'aube 22 comprend une portion amont 22.5 de longueur l1 dépourvue d'ailette 28 et une portion aval 22.6 de longueur l2 munie d'une ou plusieurs ailettes 28. La partie amont 22.5 peut correspondre à une géométrie d'aube en elle-même avec un bord de fuite qui se prolonge axialement, toute la partie aval 22.6 étant formée d'une lame prolongeant un tel bord de fuite.

L'ailette / les ailettes 28 peut/peuvent être supportées par l'extrados ou l'intrados, ou les deux.

La longueur axiale totale de l'aube est l3=l1+l2. La longueur l1 de la portion amont 22.5 représente entre 10 et 50% de la longueur totale de l'aube l3. De manière préférée l1 vaut au moins 25% de la longueur l3 de l'aube et l2 vaut au moins 2/3 de la longueur l3 de l'aube.

L'aube 22 a une épaisseur maximale e mesurée perpendiculairement à la corde.

Lorsqu'une ailette 28 est en porte-à-faux, i.e. supportée par une seule aube, elle comprend une extrémité libre 28.1 qui détermine la largeur circonférentielle E de l'ailette. De manière préférée E est très supérieur à e, par exemple au moins 5 fois supérieur.

Chaque ailette 28 comprend une arête amont 28.2 et une arête aval 28.3.

L'arête amont 28.2 peut être profilée aérodynamiquement à la façon d'un bord d'attaque. L'arête aval 28.3 peut être profilée aérodynamiquement à la façon d'un bord de fuite.

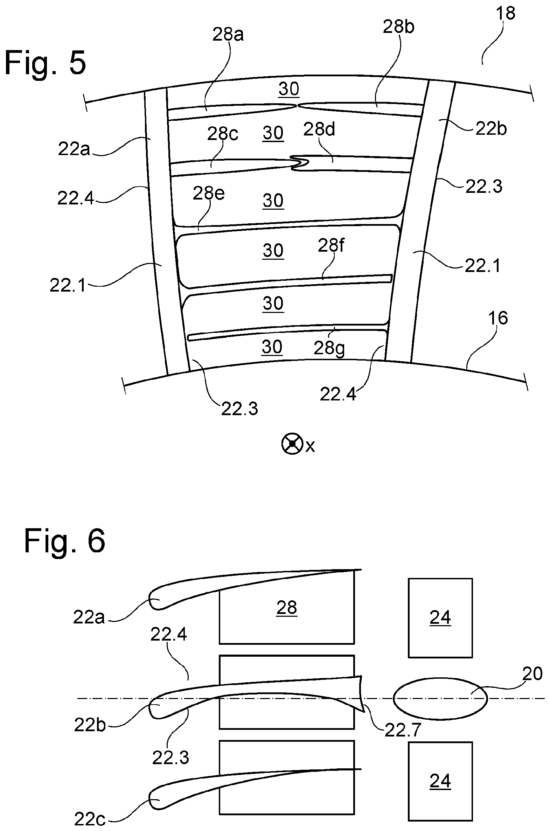

La figure 5 rassemble un certain nombre de modes de réalisation possibles pour les ailettes 28 entre deux aubes circonférentiellement adjacentes 22a et 22b. Il est entendu que toutes les ailettes 28 d'une même rangée annulaire d'aubes 22 peuvent être de même nature ou être de différentes natures, et de même toutes les ailettes 28 d'un même espace inter-aubes peuvent être identiques ou différentes. La figure 5 rassemble différents exemples.

Ainsi, les ailettes 28a et 28b s'étendent depuis un intrados 22.3 et depuis un extrados 22.4, respectivement. Leurs extrémités libres se rejoignent environ au centre de l'espace inter-aubes. Il en est de même des ailettes 28c et 28d.

Les ailettes 28a et 28b sont effilées pour faciliter l'écoulement du flux à leurs extrémités libres. Les ailettes 28c et 28d présentent des extrémités libres avec des profils complémentaires pour minimiser l'écart entre leurs extrémités.

L'ailette 28e est portée par les deux aubes adjacentes 22a, 22b. Celle-ci illustre que des congés de raccordement peuvent être prévus au voisinage des aubes pour minimiser les perturbations du flux d'air. Cela peut être le cas des autres exemples d'ailettes 28 présentés sur la figure 5.

Les aubes 28f et 28g montrent que des ailettes peuvent s'étendre sur l'intégralité de l'espace inter-aube.

L'ensemble des aubes 22a, 22b et des ailettes 28 qui s'étendent depuis ces aubes, ainsi qu'éventuellement un tronçon angulaire de 16 et 18, peut être monobloc. Optionnellement, plusieurs aubes adjacentes et leurs ailettes peuvent être monobloc, décrivant ainsi un secteur angulaire de quelques degrés d'angles à quelques dizaines de degrés (par exemple 12 secteurs de 30° formant la rangée annulaire d'aubes 22).

Les ailettes 28 peuvent avoir une courbure concentrique avec l'axe de la turbomachine. La courbure dans le plan de la figure 5 peut évoluer long de l'axe pour se rapprocher de la forme des couloirs de l'échangeur 24. Les couloirs 30 du canal de diffusion peuvent ainsi servir de transition pour bien préparer l'écoulement à son passage dans l'échangeur 24.

La figure 5 représente six couloirs 30 de hauteur radiale sensiblement équivalente, résultant d'une distribution équitable des ailettes entre le pied et la tête des aubes 22.

Alternativement, une autre distribution des ailettes 28 est possible entre le pied et la tête des aubes 22. Par exemple, les ailettes peuvent être plus espacées au pied de l'aube et plus resserrées en tête d'aube pour réaliser des couloirs 30 de section environ équivalente et ainsi répartir le flux F2 en un nombre de couloirs de volume équivalent.

La figure 6 montre que dans un mode de réalisation privilégié, les bras structuraux 20 peuvent avoir la même position axiale que (ou être au moins partiellement agencés en chevauchement de) l'échangeur de chaleur 24.

Afin de bien conduire le flux F2 en amont du bras 20, l'aube 22b qui se trouve circonférentiellement alignée du bras 20 peut avoir un profil adapté. En effet, l'intrados 22.3 et l'extrados 22.4 ne se rejoignent pas en un point (vu dans le profil en coupe perpendiculaire au rayon). L'aube 22b est évasée. Une surface de fuite 22.7 remplace l'habituel bord de fuite.

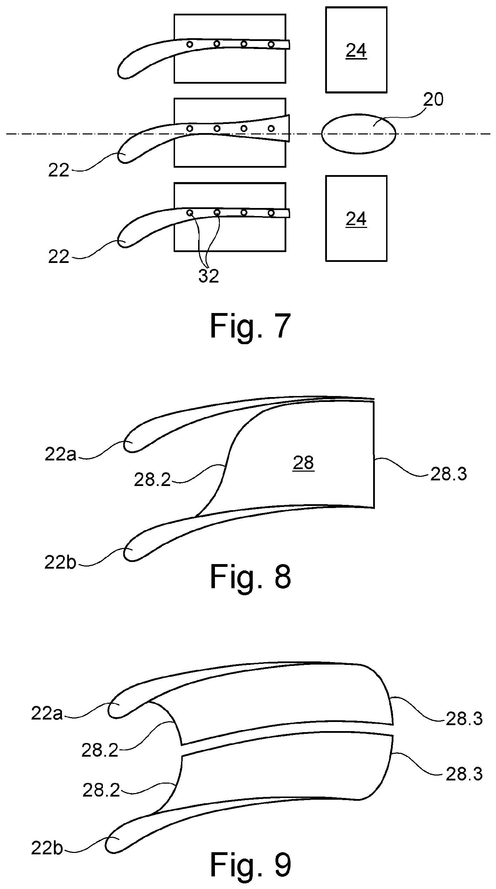

La figure 7 montre une variante supplémentaire. Les aubes 22 sont ici percées de conduites 32 permettant la circulation d'un fluide, notamment de l'huile. Ainsi, les ailettes 28, dont le but premier est de ralentir le flux F2 pour l'échangeur 24, peuvent également servir d'échangeur de chaleur en refroidissant le fluide circulant dans les conduites 32. Les conduites 32 sont préférentiellement circonscrites à la portion axiale des aubes 22 correspondant aux ailettes 28 (portion aval notée 22.6 sur la figure 4).

Les figures 8 et 9 montrent une vue radiale d'un espace inter-aubes. Les ailettes 28 y sont décrites avec des arêtes amont 28.2 et/ou aval 28.3 qui ont un profil adapté pour minimiser les perturbations du flux F2. Par exemple, sur la figure 8, l'ailette 28 s'étend depuis l'extrados de l'aube 22b uniquement. L'arête amont 28.2 présente une courbure avec un point d'inflexion, suivant grossièrement l'extrados de l'aube 22b d'une part et suivant grossièrement l'intrados de l'aube 22a d'autre part.

Sur la figure 9, deux ailettes 28 occupent l'espace inter-aubes. Le profil de l'arête amont 28.2 des ailettes 28 est concave et le profil de l'arête aval 28.3 des ailettes 28 est convexe.

Il est entendu que chaque détail de chaque figure peut être prévu en combinaison de chaque détail de chaque autre figure. Par exemple, chacun des types d'ailettes présentés en la figure 5 peut être utilisé seul ou en combinaison d'un ou de plusieurs autres types d'ailettes, et chacun de ces types d'ailettes peut être prévu en amont d'un bras structural (comme sur la figure 6) ou rattaché à une aube munie de conduites 32 (comme sur la figure 7).

## Revendications

1. Turbomachine (1) pour aéronef comprenant :
- un rotor (12) ;
- un passage annulaire (19) pour l'écoulement de l'air (F2) en aval du rotor (12) ;
- une rangée annulaire d'aubes (22) de redresseur agencée dans le passage (19), chaque aube (22) présentant un intrados (22.3) et un extrados (22.4) ; et
- au moins un échangeur de chaleur (24) disposé dans le passage (19) en aval de la rangée d'aubes (22) ;
- une pluralité de couloirs de diffusion (30) en amont de l'au moins un échangeur (24), **caractérisé en ce que** chaque couloir (30) est délimité circonférentiellement par un intrados (22.3) et par un extrados (22.4) de deux aubes circonférentiellement adjacentes (22a, 22b), et chaque couloir (30) étant délimité radialement par au moins une ailette (28) portée par au moins une des deux aubes circonférentiellement adjacentes (22a, 22b).

2. Turbomachine (1) selon la revendication 1, **caractérisée en ce que** l'au moins une ailette (28g) est portée par l'extrados (22.4) d'une aube (22) des deux aubes circonférentiellement adjacentes (22a, 22b), et a une extrémité circonférentielle (28.1) en porte-à-faux en regard de l'intrados (22.3) de l'autre des deux aubes (22).

3. Turbomachine (1) selon la revendication 1, **caractérisée en ce que** l'au moins une ailette (28f) est portée par l'intrados (22.3) d'une aube (22) des deux aubes circonférentiellement adjacentes (22a, 22b), et a une extrémité circonférentielle (28.1) en porte-à-faux en regard de l'extrados (22.4) de l'autre des deux aubes (22).

4. Turbomachine (1) selon la revendication 1, **caractérisée en ce que** l'au moins une ailette (28e) est portée par l'intrados (22.3) d'une aube (22) des deux aubes circonférentiellement adjacentes et par l'extrados (22.4) de l'autre des deux aubes (22a, 22b).

5. Turbomachine (1) selon l'une des revendications 2 à 4, **caractérisée en ce que** l'interface entre l'ailette (28) et l'extrados (22.4), ou entre l'ailette (28) et l'intrados (22.3) de l'aube (22) la portant, est aérodynamiquement optimisée par un congé de raccordement.

6. Turbomachine (1) selon la revendication 1, **caractérisée en ce que** chaque couloir (30) est délimité radialement intérieurement et/ou radialement extérieurement par deux ailettes (28a, 28b, 28c, 28d), dont l'une est portée par l'extrados (22.4) d'une aube (22b) et l'autre est portée par l'intrados (22.3) d'une aube (22a) circonférentiellement adjacente, chacune des deux ailettes (28) s'étendant circonférentiellement sur environ la moitié de la distance circonférentielle entre les deux aubes adjacentes (22a, 22b).

7. Turbomachine (1) selon la revendication 6, **caractérisée en ce que** chacune des deux ailettes (28) a une extrémité libre (28.1), l'extrémité libre (28.1) d'une ailette (28a, 28c) étant agencée au voisinage de l'extrémité libre (28.1) de l'autre ailette (28b, 28d), les extrémités libres (28.1) étant préférentiellement effilées pour être aérodynamiquement optimisées.

8. Turbomachine (1) selon l'une des revendications précédentes, **caractérisée en ce que** les deux aubes circonférentiellement adjacentes (22a, 22b) ainsi que l'au moins une ailette (28) délimitant le couloir (30) entre ces deux aubes (22), sont monobloc.

9. Turbomachine (1) selon l'une des revendications précédentes, **caractérisée en ce que** des bras structuraux (20) sont agencés à une position axiale qui chevauche au moins partiellement celle de l'au moins un échangeur (24), une aube (22b) de la rangée annulaire d'aubes (22) étant alignée circonférentiellement avec chaque bras structural (20), ladite aube (22b) ayant de préférence un profil de fuite évasé.

10. Turbomachine (1) selon l'une des revendications précédentes, **caractérisée en ce que** les aubes (22) sont distribuées angulairement de façon irrégulière, les aubes (22) étant plus espacées circonférentiellement les unes des autres dans le ou les portions angulaires occupées par le ou les échangeurs (24).

11. Turbomachine (1) selon l'une des revendications précédentes, **caractérisée en ce que** la rangée annulaire d'aubes (22) comprend des aubes (22) supportant une ou plusieurs ailette(s) (28) et des aubes (22) dépourvues d'ailette (28), ces dernières s'étendant axialement sur une longueur (11) plus courte, préférentiellement au moins deux fois ou au moins trois fois plus courte, que les premières.

12. Turbomachine (1) selon l'une des revendications précédentes, **caractérisée en ce que** l'ailette (28) s'étend circonférentiellement depuis l'au moins une des deux aubes d'une largeur (E) au moins égale à 5 fois l'épaisseur maximale (e) de ladite aube, l'épaisseur maximale (e) étant définie entre la surface intrados (22.3) et la surface extrados (22.4).

13. Turbomachine (1) selon l'une des revendications précédentes, **caractérisée en ce que** l'aube (22) portant l'ailette (28) comprend une portion amont (22.5) dépourvue d'ailette (22) et s'étendant sur au moins un quart de la longueur axiale de l'aube (22).

14. Turbomachine (1) selon l'une des revendications précédentes, **caractérisée en ce que** l'ailette (28) s'étend axialement sur une longueur (l2) d'au moins deux tiers de la longueur axiale (l3) de l'aube (22).

## Patentansprüche

1. Turbomaschine (1) für Luftfahrzeuge, umfassend:
- einen Rotor (12);
- einen ringförmigen Durchgang (19) für den Luftstrom (F2) stromabwärts des Rotors (12);
- eine ringförmige Reihe von Leitschaufeln (22), die im Durchgang (19) angeordnet sind, wobei jede Schaufel (22) eine Unterseite (22.3) und eine Oberseite (22.4) aufweist; und
- mindestens einen Wärmeaustauscher (24), der im Durchgang (19) stromabwärts der Reihe von Schaufeln (22) angeordnet ist;
- eine Vielzahl von Diffusionsgängen (30) stromaufwärts des mindestens einen Wärmeaustauschers (24), **dadurch gekennzeichnet, dass** jeder Gang (30) in Umfangsrichtung durch eine Unterseite (22.3) und eine Oberseite (22.4) von zwei benachbarten Schaufeln (22a, 22b) begrenzt wird, und jeder Gang (30) radial durch mindestens eine Flosse (28) begrenzt wird, die von mindestens einer der beiden benachbarten Schaufeln (22a, 22b) getragen wird.

2. Turbomaschine (1) nach Anspruch 1, **dadurch gekennzeichnet, dass** die mindestens eine Flosse (28g) von der Oberseite (22.4) einer Schaufel (22) der beiden benachbarten Schaufeln (22a, 22b) getragen wird und ein freitragendes Ende (28.1) gegenüber der Unterseite (22.3) der anderen der beiden Schaufeln (22) hat.

3. Turbomaschine (1) nach Anspruch 1, **dadurch gekennzeichnet, dass** die mindestens eine Flosse (28f) von der Unterseite (22.3) einer Schaufel (22) der beiden benachbarten Schaufeln (22a, 22b) getragen wird und ein freitragendes Ende (28.1) gegenüber der Oberseite (22.4) der anderen der beiden Schaufeln (22) hat.

4. Turbomaschine (1) nach Anspruch 1, **dadurch gekennzeichnet, dass** die mindestens eine Flosse (28e) von der Unterseite (22.3) einer Schaufel (22) der beiden benachbarten Schaufeln und von der Oberseite (22.4) der anderen der beiden Schaufeln (22a, 22b) getragen wird.

5. Turbomaschine (1) nach einem der Ansprüche 2 bis 4, **dadurch gekennzeichnet, dass** die Schnittstelle zwischen der Flosse (28) und der Oberseite (22.4) oder zwischen der Flosse (28) und der Unterseite (22.3) der sie tragenden Schaufel (22) durch einen aerodynamisch optimierten Übergang optimiert ist.

6. Turbomaschine (1) nach Anspruch 1, **dadurch gekennzeichnet, dass** jeder Gang (30) radial innen und/oder radial außen durch zwei Flossen (28a, 28b, 28c, 28d) begrenzt ist, von denen eine von der Oberseite (22.4) einer Schaufel (22b) und die andere von der Unterseite (22.3) einer benachbarten Schaufel (22a) getragen wird, wobei jede der beiden Flossen (28) sich in Umfangsrichtung über etwa die Hälfte der Umfangsrichtung zwischen den beiden benachbarten Schaufeln (22a, 22b) erstreckt.

7. Turbomaschine (1) nach Anspruch 6, **dadurch gekennzeichnet, dass** jede der beiden Flossen (28) ein freies Ende (28.1) hat, wobei das freie Ende (28.1) einer Flosse (28a, 28c) im Bereich des freien Endes (28.1) der anderen Flosse (28b, 28d) angeordnet ist, wobei die freien Enden (28.1) vorzugsweise zur aerodynamischen Optimierung verjüngt sind.

8. Turbomaschine (1) nach einem der vorhergehenden Ansprüche, **dadurch gekennzeichnet, dass** die zwei umfangsmäßig benachbarten Schaufeln (22a, 22b) sowie die mindestens eine Flosse (28), die den Gang (30) zwischen diesen beiden Schaufeln (22) begrenzen, monolithisch sind.

9. Turbomaschine (1) nach einem der vorhergehenden Ansprüche, **dadurch gekennzeichnet, dass** Strukturarme (20) an einer axialen Position angeordnet sind, die zumindest teilweise die des mindestens einen Wärmeaustauschers (24) überlappt, wobei eine Schaufel (22b) der ringförmigen Reihe von Schaufeln (22) umfangsmäßig mit jedem Strukturarm (20) übereinstimmt, wobei die betreffende Schaufel (22b) bevorzugt ein verbreitertes Hinterkantenprofil aufweist.

10. Turbomaschine (1) nach einem der vorhergehenden Ansprüche, **dadurch gekennzeichnet, dass** die Schaufeln (22) unregelmäßig winklig verteilt sind, wobei die Schaufeln (22) umfangsmäßig weiter voneinander entfernt sind in dem oder den angulären Abschnitten, die von den Wärmetauschern (24) besetzt sind.

11. Turbomaschine (1) nach einem der vorhergehenden Ansprüche, **dadurch gekennzeichnet, dass** die ringförmige Reihe von Schaufeln (22) Schaufeln (22) umfasst, die eine oder mehrere Flossen (28) tragen, und Schaufeln (22), die keine Flosse (28) tragen, wobei die letzteren axial eine kürzere Länge (11) haben, vorzugsweise mindestens zweimal oder mindestens dreimal kürzer, als die erstgenannten.

12. Turbomaschine (1) nach einem der vorhergehenden Ansprüche, **dadurch gekennzeichnet, dass** sich die Flosse (28) umfangsmäßig von der mindestens einen der beiden Schaufeln über eine Breite (E) erstreckt, die mindestens das 5-fache der maximalen Dicke (e) der betreffenden Schaufel beträgt, wobei die maximale Dicke (e) zwischen der Unterseite (22.3) und der Oberseite (22.4) definiert ist.

13. Turbomaschine (1) nach einem der vorhergehenden Ansprüche, **dadurch gekennzeichnet, dass** die Schaufel (22), die die Flosse (28) trägt, eine vordere Portion (22.5) ohne Flosse umfasst, die sich über mindestens ein Viertel der axialen Länge der Schaufel (22) erstreckt.

14. Turbomaschine (1) nach einem der vorhergehenden Ansprüche, **dadurch gekennzeichnet, dass** sich die Flosse (28) axial über eine Länge (12) von mindestens zwei Dritteln der axialen Länge (13) der Schaufel (22) erstreckt.

## Claims

1. A turbomachine (1) for an aircraft comprising:
- a rotor (12);
- an annular passage (19) for airflow (F2) downstream of the rotor (12);
- an annular row of stator blades (22) arranged in the passage (19), each blade (22) having an intrados (22.3) and an extrados (22.4); and
- at least one heat exchanger (24) disposed in the passage (19) downstream of the row of blades (22);
- a plurality of diffusing ducts (30) upstream of the at least one exchanger (24), **characterized in that** each duct (30) is circumferentially delimited by
an intrados (22.3) and an extrados (22.4) of two circumferentially adjacent blades (22a, 22b), and each duct (30) being radially delimited by at least one fin (28) carried by at least one of the two circumferentially adjacent blades (22a, 22b).

2. The turbomachine (1) according to claim 1, **characterized in that** the at least one fin (28g) is carried by the extrados (22.4) of one blade (22) of the two circumferentially adjacent blades (22a, 22b), and has a cantilevered end (28.1) facing the intrados (22.3) of the other of the two blades (22).

3. The turbomachine (1) according to claim 1, **characterized in that** the at least one fin (28f) is carried by the intrados (22.3) of one blade (22) of the two circumferentially adjacent blades (22a, 22b), and has a cantilevered end (28.1) facing the extrados (22.4) of the other of the two blades (22).

4. The turbomachine (1) according to claim 1, **characterized in that** the at least one fin (28e) is carried by the intrados (22.3) of one blade (22) of the two circumferentially adjacent blades and by the extrados (22.4) of the other of the two blades (22a, 22b).

5. The turbomachine (1) according to any one of claims 2 to 4, **characterized in that** the interface between the fin (28) and the extrados (22.4), or between the fin (28) and the intrados (22.3) of the blade (22) carrying it, is aerodynamically optimized by a connecting fillet.

6. The turbomachine (1) according to claim 1, **characterized in that** each duct (30) is radially inwardly and/or radially outwardly delimited by two fins (28a, 28b, 28c, 28d), one of which is carried by the extrados (22.4) of one blade (22b) and the other by the intrados (22.3) of a circumferentially adjacent blade (22a), each of the two fins (28) extending circumferentially over approximately half the circumferential distance between the two adjacent blades (22a, 22b).

7. The turbomachine (1) according to claim 6, **characterized in that** each of the two fins (28) has a free end (28.1), the free end (28.1) of one fin (28a, 28c) being arranged near the free end (28.1) of the other fin (28b, 28d), the free ends (28.1) being preferably tapered to be aerodynamically optimized.

8. The turbomachine (1) according to one of the preceding claims, **characterized in that** the two circumferentially adjacent blades (22a, 22b) as well as the at least one fin (28) delimiting the duct (30) between these two blades (22), are monolithic.

9. The turbomachine (1) according to one of the preceding claims, **characterized in that** structural arms (20) are arranged in an axial position that at least partially overlaps that of the at least one exchanger (24), a blade (22b) of the annular row of blades (22) being circumferentially aligned with each structural arm (20), the said blade (22b) preferably having a flared trailing edge profile.

10. The turbomachine (1) according to one of the preceding claims, **characterized in that** the blades (22) are angularly distributed in an irregular manner, the blades (22) being more circumferentially spaced apart from each other in the angular portion or portions occupied by the exchanger(s) (24).

11. The turbomachine (1) according to one of the preceding claims, **characterized in that** the annular row of blades (22) includes blades (22) supporting one or more fins (28) and blades (22) without fins (28), the latter extending axially over a shorter length (11), preferably at least twice or at least three times shorter, than the former.

12. The turbomachine (1) according to one of the preceding claims, **characterized in that** the fin (28) extends circumferentially from at least one of the two blades over a width (E) at least equal to 5 times the maximum thickness (e) of the said blade, the maximum thickness (e) being defined between the intrados surface (22.3) and the extrados surface (22.4).

13. The turbomachine (1) according to one of the preceding claims, **characterized in that** the blade (22) carrying the fin (28) includes an upstream portion (22.5) lacking a fin and extending over at least one quarter of the axial length of the blade (22).

14. The turbomachine (1) according to one of the preceding claims, **characterized in that** the fin (28) extends axially over a length (12) of at least two-thirds of the axial length (13) of the blade (22).
